# EUROPÄISCHE PATENTSCHRIFT

(11) **EP 0 589 307 B1**
(45) Veröffentlichungstag und Bekanntmachung des Hinweises auf die Patenterteilung: **27.11.1996**
(21) Anmeldenummer: 93114587.4
(22) Anmeldetag: 10.09.1993
(51) Int. Cl.: H02B 1/16, H02G 5/00

(54) **Baugruppenträger mit einem Streifenleiter mit integrierter elektrisch kontaktierender mechanischer Befestigung**
Subassembly support with a connection strip with integrated, electrically contacting mechanical fixation
Support pour appareils comportant un rail avec fixation mécanique et contact électrique integral

(30) Priorität: 23.09.1992 DE 9212802 U
(43) Veröffentlichungstag der Anmeldung: 30.03.1994
(73) Patentinhaber: SIEMENS AKTIENGESELLSCHAFT, 80333 München (DE)
(72) Erfinder: Behrens, Ralf, Dipl.-Ing. (FH), D-90419 Nürnberg (DE); Meier, Norbert, Dipl.-Ing. (FH), D-92353 Postbauer-Heng (DE); Schaffer, Kurt-Michael, D-90542 Eckental (DE)

(56) Entgegenhaltungen:
- DE-A- 3 149 251
- FR-A- 2 302 612
- US-A- 2 967 287
- US-A- 4 384 181

## Beschreibung

Die Erfindung betrifft einen Baugruppenträger zur Aufnahme von Flachbaugruppen mit mindestens einem Streifenleiter auf der Rückseite, der zur Zuführung und Verteilung von Versorgungsspannungen und Bezugspotentialen dient.

In der elektrischen Aufbautechnik werden Streifenleiter benötigt, welche in der Art einer Sammelschiene die Verteilung insbesondere von Versorgungsspannungen und Bezugspotentialen und einen leichten Anschluß von einer Vielzahl räumlich verteilter elektrischer Betriebsmittel daran ermöglichen. Derartige Streifenleiter enthalten in der Regel mehrere Stromschienen, welche gegeneinander und gegen äußere Berührungen isoliert sind. Meist sind die Stromschienen vollständig umgossen im Inneren eines Kunststoffgehäuses eingelegt. An jeder Stromschiene sind eine Vielzahl von Anschlußmitteln angebracht und durch das Kunststoffgehäuse nach außen geführt. Die Anschlußmittel weisen bevorzugt die Form von nadelartigen Anschlußstiften auf, sind bevorzugt reihenartig angeordnet und bilden auf einer Außenseite des Streifenleiters ein sogenanntes Stachelfeld. Von diesen Anschlußstiften, welche pro Reihe ein übereinstimmendes Potential aufweisen, können die einzelnen Spannungen z.B. mittels in sogenannter "wire-wrap"-Technik angebrachter Kabelverbindungen abgegriffen werden.

Die Streifenleiter selbst werden horizontal bzw. vertikal verlaufend bevorzugt auf die Rückseiten von Baugruppenträgern montiert. Die Montage erfolgt bevorzugt durch Verschraubung bzw. Verrastung mit den hinteren Stirnseiten von Verbindungsschienen bzw. Seitenwänden des Baugruppenträgers. Die elektrische Kontaktierung der einzelnen, isolierten Stromschienen des Streifenleiters mit den Quellen der Versorgungsspannungen bzw. Bezugspotentiale erfolgt bisher unter Verwendung von speziellen Leitungsverbindungen bzw. zusätzlichen mechanischen Bauteilen. So wird z.B. die das Bezugspotential verteilende Stromschiene eines Streifenleiters bislang mit speziellen Blechwinkeln bzw. geflochtenen Erdungskabelstücken mit dem geerdeten Gehäuse des Baugruppenträgers verbunden. Derartige Verbindungen haben den Nachteil, daß sie zum einen mechanisch aufwendig, platzeinnehmend und somit insbesondere an der Rückseite von Baugruppenträgern in der Vielzahl der dort zu rangierenden Kabel störend sind. Zudem weisen derartige Verbindungen eine hohe Induktivität auf, welche die Qualität des Anschlusses von Stromschienen insbesondere an Bezugspotentiale verschlechtert.

Aus der DE-A-31 49 251 ist ein Berührungsschutz einer Stromschienenanordnung eines elektrischen Schaltfeldes bekannt. Die elektrisch isolierenden Materialbahnen des Berührungsschutzes aus mit sich selbst zusammenknetbarem, selbstklebendem, plastoelastischem Butylkautschuk bedecken dabei die Stromschienenanordnung. In der im Dokument offenbarten Figur ist das Ende einer Stromschiene dargestellt, welche Verbindungs- und Anschlußteile aufweist und durch die spaltfrei gegeneinandergedrückten Materialbahnen des Berührungsschutzes isoliert ist.

Die im Dokument FR-A-2 302 612 offenbarte Anordnung betrifft eine Schiene eines elektrischen Schaltkreises aus dem Bereich der Automobiltechnologie. Die elektrisch leitende Schiene ist mit einem Isolierkörper ummantelt und mechanisch durch elektrisch nichtleitende Befestigungselemente an der Fahrzeugkarosserie befestigt. Durch einen Ausbruch im Isolierkörper kann ein Relais mit einer elektrisch leitenden Schraube mechanisch und elektrisch mit der Schiene verbunden werden.

Der Erfindung liegt die Aufgabe zugrunde, einen Baugruppenträger zur Aufnahme von Flachbaugruppen anzugeben, mit mindestens einem mechanisch vereinfacht und gleichzeitig elektrisch verbessert angebrachten Streifenleiter.

Die Aufgabe wird gelöst mit dem im Anspruch 1 enthaltenen Baugruppenträger. Eine vorteilhafte weitere Ausführungsform desselben ist im Unteranspruch enthalten.

Die Erfindung wird anhand von zwei, in den nachfolgend kurz angeführten Figuren dargestellten Ausführungsbeispielen desweiteren näher erläutert. Dabei zeigt
- FIG 1: einen Ausschnitt von einer ersten Ausführungsform der Erfindung in Draufsicht,
- FIG 2: einen Querschnitt durch den Streifenleiter von FIG 1,
- FIG 3: einen Querschnitt durch den Streifenleiter von FIG 1 speziell im Bereich eines erfindungsgemäßen Ausbruches,
- FIG 4: einen Ausschnitt von einer zweiten Ausführungsform der Erfindung in Draufsicht, wobei als Stromschienen im Streifenleiter speziell blechartige Kontaktstreifen dienen,
- FIG 5: einen Querschnitt durch den Streifenleiter von FIG 4, und
- FIG 6: einen Querschnitt durch den Streifenleiter von FIG 4 speziell im Bereich eines erfindungsgemäßen Ausbruches.

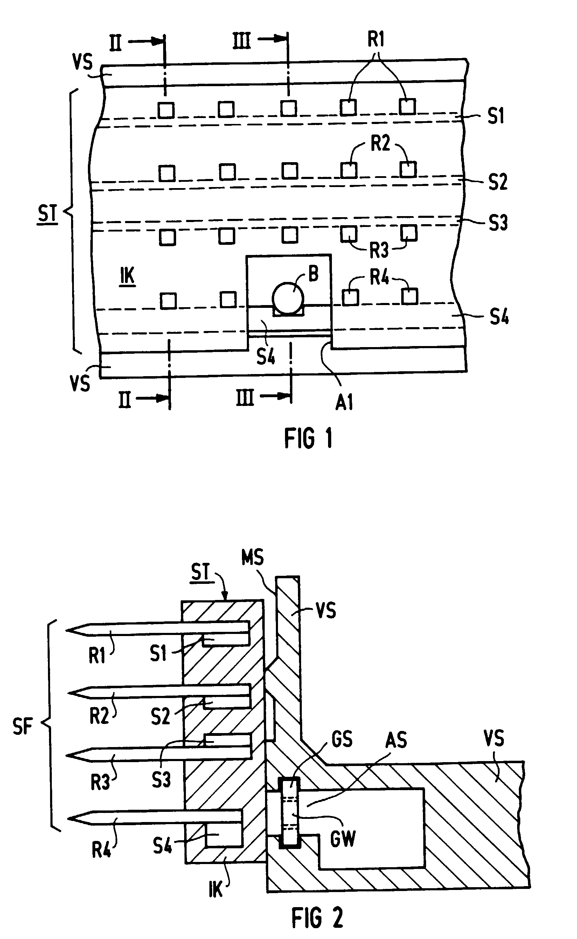

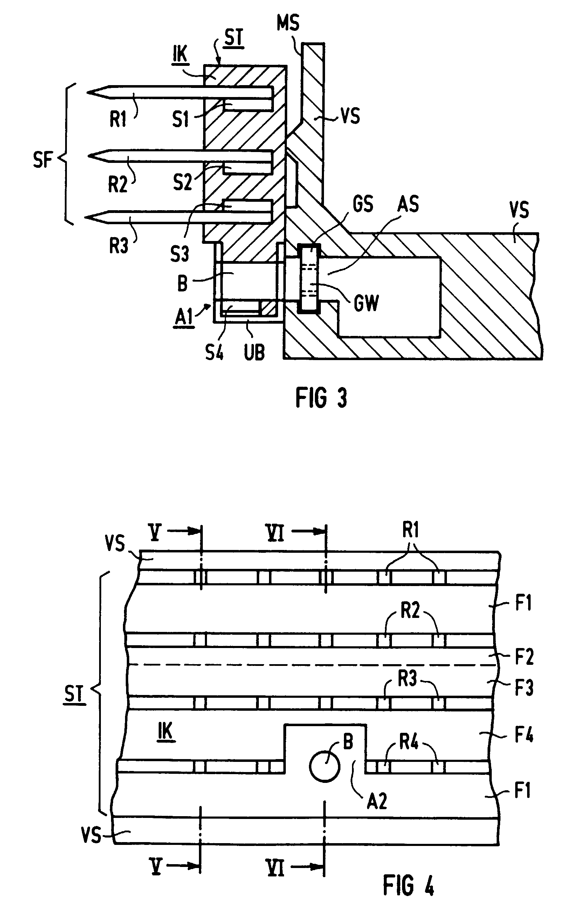

FIG 1 zeigt eine erste Ausführungsform eines gemäß der Erfindung gestalteten Streifenleiters eines Baugruppenträgers in Draufsicht. Querschnitte durch diesen Streifenleiter entlang der Schnittlinien II und III sind in den nachfolgenden Figuren 2,3 dargestellt. Dabei ist der Querschnitt II gemäß FIG 2 an eine beliebige Stelle des Streifenleiters gelegt, während der Querschnitt III gemäß FIG 3 speziell in den Bereich eines erfindungsgemäßen Ausbruches gelegt ist.

Bei dem in den Figuren 1,2,3 dargestellten Beispiel besteht der Streifenleiter ST aus einem Isoliertragekörper IK, in den beispielhaft vier Stromschienen S1...S4 horizontal verlaufend verlegt sind. An jeder Stromschiene sind eine Vielzahl von Anschlußmitteln angebracht. Diese sind auf die Außenseite des Isoliertragekörpers IK geführt, und weisen im dargestellten Beispiel bevorzugt die Form von nadelförmigen Anschlußstiften auf. So gehört zur ersten Stromschiene S1 die Reihe R1 von herausgeführten Anschlußstiften. An jedem Stift der Reihen R1 kann somit das auf der Stromschiene S1 befindliche aktuelle Potential abgegriffen werden. In der gleichen Weise sind den Stromschienen S2,S3 und S4 die Anschlußstiftreihen R2,R3 und R4 zugeordnet. Wie insbesondere aus den Figuren 2,3 ersichtlich ist, bilden die Anschlußstiftreihen R1...R4 auf der Außenseite des Isoliertragekörpers IK des Streifenleiters ST ein sogenanntes Stachelfeld SF. Hiermit werden auf einfache Weise die Potentiale der Stromschienen S1...S4 entlang des Streifenleiters ST verteilt, und können z.B. zu einer Flachbaugruppe in einem Baugruppenträger ohne umständliche Rangierungen durch Abgriff von dem lokal am nächsten liegenden Anschlußstift der jeweiligen Stromschiene auf kürzestem Weg geleitet werden.

Bei dem in den Figuren 1,2,3 dargestellten Beispiel ist der Streifenleiter ST auf die Montageoberseite MS einer Querverbindungsschiene VS aufgelegt, welche bevorzugt ein Bauteil auf der Rückseite eines Baugruppenträgers zur Aufnahme von Flachbaugruppen darstellt. Die Querverbindungsschiene VS weist entlang der gesamten Länge einen Montageschlitz AS auf, welcher in Richtung Montageoberseite MS geöffnet ist. Darin können Montagemittel zur mechanischen Halterung des Streifenleiters ST auf der Montageoberseite MS der Verbindungsschiene VS eingreifen. In den Figuren 2,3 ist beispielhaft eine Gewindelochschiene GS in den Montageschlitz AS eingelegt. Diese weist eine Reihe von Gewinden GW auf, welche bevorzugt dem Rastermaß der Anschlußstifte im Stachelfeld SF entsprechend angeordnet sind.

Erfindungsgemäß ist mindestens ein Ausbruch im Isoliertragekörper IK des Streifenleiters ST vorgesehen, wodurch ein Bereich von der mindestens einen im Isoliertragekörper verlegten Stromschiene freigelegt ist. Im Bereich des Ausbruches ist in unmittelbarer Nähe der Stromschiene eine Bohrung durch den Isolierkörper hindurchgeführt. Erfindungsgemäß kann darin ein Montagemittel derart eingelegt werden, so daß der Streifenleiter unter gleichzeitiger elektrischer Kontaktierung der freiliegenden Stromschiene mit dem Baugruppenträger mechanisch damit verbunden werden kann.

Im Beispiel der Figuren 1,3 ist ein derartiger Ausbruch A1 im Isoliertragekörper IK dargestellt, wodurch ein Bereich der Stromschiene S4 freigelegt ist. Erfindungsgemäß ist eine Bohrung B im Bereich des Ausbruches A1 in unmittelbarer Nähe des freiliegenden Bereiches der Stromschiene S4 durch den Isoliertragekörper IK hindurchgeführt. Die Bohrung kann die Stromschiene bei entsprechender Größe derselben auch teilweise oder vollständig durchdringen. Im Beispiel der Figur 1 ist die Bohrung B in einer Kerbe am Rand der Stromschiene S4 durch den Isoliertragekörper IK geführt. Erfindungsgemäß sind nun Montagemittel in die Bohrung B derart einlegbar, daß der Streifenleiter ST hierüber mit dem Baugruppenträger bzw. einem Teil desselben unter gleichzeitiger elektrischer Kontaktierung mit der freiliegenden Stromschiene S4 mechanisch verbindbar ist. Besonders geeignet sind hierzu Schrauben mit Unterlegscheiben, welche im Bereich des Ausbruches Al großflächig und niederohmig auf der freiliegenden Oberfläche der Stromschiene S4 aufliegen. Gemäß der Schnittdarstellung in FIG 3 kann eine solche Schraube die Bohrung B durchdringen, und ragt dann mit dem Schaftende in den Aufnahmeschlitz AS hinein. Dort kann sie beispielhaft in ein Gewindeloch GW in einer in den Montageschlitz AS eingelegten Gewindelochschiene GS eingreifen.

Die erfindungsgemäße Ausführung des Baugruppenträgers mit angebrachtem Streifenleiter hat den besonderen Vorteil, daß mit Hilfe eines einzigen, durch die Bohrung B im Ausbruch Al hindurchgeführten Montagemittels eine mechanische Verbindung des Streifenleiters ST mit z.B. einer Verbindungsschiene VS bei gleichzeitiger niederohmiger und streuinduktivitätsarmer elektrischer Kontaktierung der freiliegenden Stromschiene S4 mit der Verbindungsschiene bewerkstelligt werden kann. Die in FIG 1 dargestellte Ausführungsform ist besonders geeignet zur Herstellung von Masseverbindungen zwischen dem Bezugspotential einer Querverbindungsschiene VS bzw. eines diese Schiene aufweisenden Baugruppenträgers und einer dieses Bezugspotential horizontal rangierenden Stromschiene in dem Streifenleiter. Selbstverständlich können unter unveränderter Anwendung des der Erfindung zugrunde liegenden Prinzips auch alle übrigen Stromschienen S1,S2,S3 des Streifenleiters der Figuren 1,2,3 mit anderen, nicht dargestellten Körpern bzw. Teilen der Verbindungsschiene VS unter gleichzeitiger elektrischer Kontaktierung mechanisch verbunden werden. Auf diese Weise können auch unterschiedliche Versorgungsspannungen auf die Stromschienen S1,S2,S3 und die dazugehörigen Anschlußstiftreihen R1,R2,R3 gelegt werden.

Gemäß einer weiteren, in den Figuren 1 und 3 bereits dargestellten Ausführungsform befindet sich der Ausbruch Al und die durch den Isoliertragekörper IK durchgeführte Bohrung B gerade an der Position eines Anschlußstiftes z.B. der Reihe R4. Die Lage von Ausbruch und Bohrung ist somit in optimaler Weise an das durch die Lage der Anschlußstifte in den AnReihen R1...R4 vorgegebene Raster im Stachelfeld SF angepaßt. Schließlich kann gemäß FIG 3 zur weiteren Kontaktverbesserung zwischen dem in die Bohrung B eingelegten Montagemittel und der darunter liegenden Stromschiene S4 ein bevorzugt C-förmiger Unterlagebügel UB vorgesehen sein.

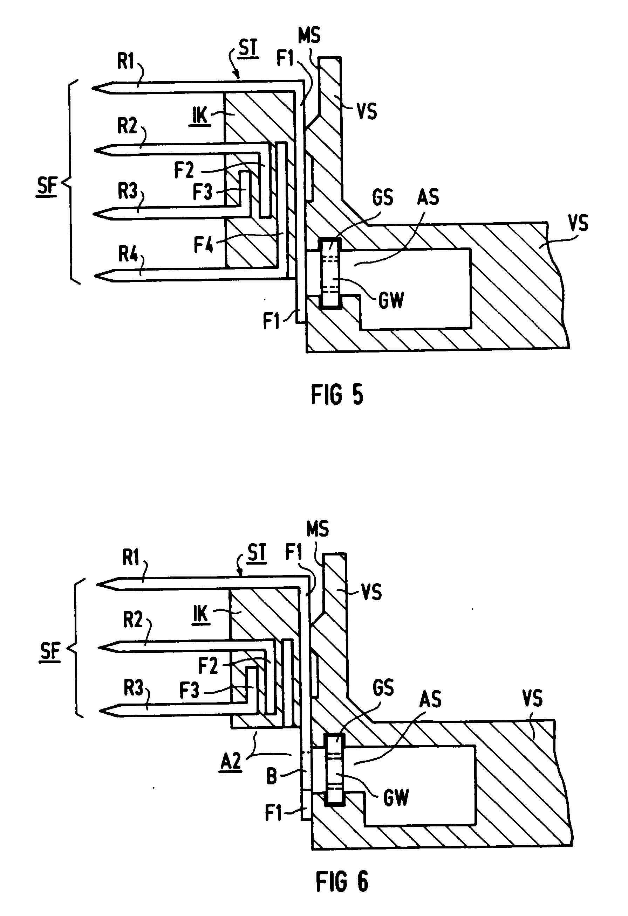

In den Figuren 4,5,6 ist schließlich eine zweite, mögliche Ausführungsform eines gemäß der Erfindung gestalteten Streifenleiters ST eines Baugruppenträgers dargestellt. Dabei zeigt FIG 4 wiederum einen Ausschnitt des Streifenleiters in Draufsicht. FIG 5 zeigt einen Querschnitt entlang der Schnittlinie V an einer beliebigen Stelle des Streifenleiters, und FIG 6 einen Querschnitt entlang der speziell durch den Ausbruch A2 und die Bohrung B gelegten Schnittlinie VI. Im Gegensatz zum Ausführungsbeispiel der Figuren 1,2,3 sind die im Isoliertragekörper IK isoliert verlegten Stromschienen im Beispiel der Figuren 4,5,6 in Form von langgestreckten, übereinander liegend angeordneten blechartigen Kontaktstreifen F1...F4 ausgeführt. Eine derartige Ausführung hat den Vorteil, daß die zu einem Kontaktstreifen gehörige Reihe von Anschlußstiften auf einfache Weise durch Ausstanzungen an einer Längskante des Kontaktstreifens hergestellt werden können. Die nicht weggestanzten, verbleibenden Blechstreifen werden als Anschlußstifte schließlich reihenartig um 90 Grad abgewinkelt. Auf diese Weise entstehen besonders vorteilhaft einteilig mit den dazugehörigen Kontaktstreifen F1...F4 verbundene Anschlußstiftreihen R1...R4. Die Kontaktstreifen F1...F4 sind wiederum gegenseitig isoliert im Inneren des Isoliertragekörpers IK verlegt. Die als Anschlußmittel dienenden Anschlußstiftreihen R1...R4 sind unter Bildung eines Stachelfeldes SF auf die Außenseite des Isoliertragekörpers IK herausgeführt.

Gemäß der Darstellung von FIG 5 ist der zur Anschlußstiftreihe R1 gehörige Kontaktstreifen F1 so verlegt, daß er auf der Unterseite des Isoliertragekörpers IK zu liegen kommt, und bei der Anbringung des Streifenleiters ST bevorzugt direkt auf der Montageoberseite MS eine darunterliegenden Querverbindungsschiene VS aufliegt.

Gemäß den Darstellungen in den Figuren 4 und 6 ist auch erfindungsgemäß bei diesem Beispiel ein Ausbruch A2 im Isoliertragekörper IK vorgesehen. Hierdurch wird ein Bereich des als Stromschiene dienenden Kontaktstreifens F1 derart freigelegt, daß eine Bohrung B durch den Isoliertragekörper IK und in diesem Fall vollständig durch den Kontaktstreifen F1 hindurchgeführt werden kann. In die Bohrung ist wiederum ein Montagemittel, insbesondere eine Schraube derart einlegbar, daß insbesondere ein Schraubenkopf niederohmig und streuinduktivitätsarm großflächig mit der freigelegten Oberfläche des Kontaktstreifens F1 im Bereich des Ausbruches A2 elektrisch kontaktiert und die Schraube gemäß der Darstellung von FIG 6 zur mechanischen Verbindung des gesamten Streifenleiters mit der darunter liegenden Verbindungsschiene VS in eine Gewindeloch GW einer Gewindelochschiene GS im Montageschlitz AS eingreift. Auch hierbei ist es gemäß der Erfindung mit einem einzigen Montagemittel möglich, den Streifenleiter ST mechanisch mit einem Körper VS welcher Bestandteil des Baugruppenträgers ist zu verbinden, und gleichzeitig eine gute elektrische Kontaktierung mit demselben herzustellen.

Die in den Figuren 4,5 und 6 dargestellte Ausführung der Erfindung ist wiederum besonders geeignet, um eine der Anschlußstiftreihen eines als Kontaktschiene dienenden Kontaktstreifens des Streifenleiters ST mit dem Massepotential eines tragenden Körpers, in diesem Fall beispielhaft der Verbindungsschiene VS auf der Rückseite eines Baugruppenträgers, elektrisch zu kontaktieren. Selbstverständlich können auch die Kontaktstiftreihen R2,R3,R4 der dazugehörigen Kontaktstreifen F2,F3,F4 in der erfindungsgemäßen Weise mit unterschiedliche Potentiale aufweisenden Teilen eines Körpers des Baugruppenträgers unter gleichzeitiger elektrischer Kontaktierung mechanisch verbunden werden.

## Patentansprüche

1. Baugruppenträger zur Aufnahme von Flachbaugruppen, mit mindestens einem Streifenleiter (ST) auf der Rückseite für die Zuführung und Verteilung von Versorgungsspannungen und Bezugspotentialen, wobei der Streifenleiter (ST) enthält
a) einen Isoliertragekörper (IK)
b) mindestens eine Stromschiene (S1...S4,F1...F4), welche im Isoliertragekörper (IK) verlegt ist und eine Vielzahl (SF) von auf die Außenseite des Isoliertragekörpers (IK) geführten Anschlußmitteln (R1 bzw. R2,R3,R4) aufweist,
c) mindestens einen Ausbruch (A1 bzw. A2) im Isoliertragekörper (IK), wodurch ein Bereich der Stromschiene (S4 bzw. F1) freigelegt ist, und
d) eine Bohrung (B), welche im Ausbruch (A1 bzw. A2) in unmittelbarer Nähe des freiliegenden Bereiches der Stromschiene (S4 bzw. F1) bzw. diese teilweise oder vollständig durchdringend durch den Isoliertragekörper (IK) geführt und ein Montagemittel, insbesondere eine Schraube, derart einlegbar ist, daß der Streifenleiter (ST) mit einem Teil des Baugruppenträgers unter gleichzeitiger elektrischer Kontaktierung mit der Stromschiene (S4,F1) mechanisch verbindbar ist (FIG 1 bzw. 4).

2. Baugruppenträger nach Anspruch 1, wobei
a) die auf die Außenseite des Isoliertragekörpers (IK) geführten Anschlußmittel (R1 bzw. R2,R3,R4) der Stromschiene (S1...S4.F1...F4) bevorzugt nadelförmige, in Reihen angeordnete Anschlußstifte sind, und
b) der Ausbruch (A1 bzw. A2) im Isolierkörper (IK) und die hindurchgeführte Bohrung (B) sich an der Position eines Anschlußstiftes in einer Reihe (R4) befinden (FIG 1 bzw.4).

## Claims

1. Assembly carrier for the accommodation of pluggable printed-board assemblies, having at least one strip conductor (ST) on the rear side for the supply and distribution of supply voltages and reference potentials, wherein the strip conductor (ST) comprises
a) an insulating carrier body (IK),
b) at least one conductor rail (S1...S4,F1...F4) which is laid in the insulating carrier body (IK) and has a plurality (SF) of terminals (R1 and R2, R3, R4) which are directed to the outside of the insulating carrier body (IK),
c) at least one break (A1 or A2) in the insulating carrier body (IK), whereby a region of the conductor rail (S4 or F1 respectively) is exposed, and
d) a bore (B), which is directed through the insulating carrier body (IK) in the break (A1 or A2) in the immediate vicinity of the exposed region of the conductor rail (S4 or F1) or such that it partly or completely penetrates the latter, and a means of installation, in particular a screw, can be inserted in such a way that the strip conductor (ST) can be mechanically connected with a portion of the assembly carrier whilst simultaneously establishing electrical contact with the conductor rail (S4, F1) (Figure 1 or 4 respectively).

2. Assembly carrier according to claim 1, wherein
a) the terminals (R1 and R2, R3, R4) of the conductor rail (S1...S4, F1...F4) that are directed to the outside of the insulating carrier body (IK) are preferably needle-shaped terminal pins which are arranged in rows, and
b) the break (A1 or A2) in the insulating body (IK) and the bore (B), which is directed therethrough, are located at the position of a terminal pin in a row (R4) (Figure 1 or 4 respectively).

## Revendications

1. Châssis de réception de modules plats comportant au moins un guide (ST) de bande sur la face arrière pour l'amenée et la distribution de tensions d'alimentation et de potentiels de référence, le guide (ST) de bande comprenant :
a) un corps (IK) de support isolant,
b) au moins un rail (S1 à S4, F1 à F4) de contact, qui est monté dans le corps (IK) de support isolant et qui comporte une pluralité (SF) de moyens (R1 ou R2, R3, R4) de raccordement guidés sur le côté extérieur du corps (IK) de support isolant,
c) au moins un creux (A1 ou A2) dans le corps (IK) de support isolant, ce qui dégage une zone du rail (S4 ou F1) de contact, et
d) un trou (B), qui est ménagé dans le creux (A1 ou A2) à proximité immédiate de la zone dégagée du rail (S4 ou F1) de contact ou qui traverse le corps (IK) de support isolant en pénétrant en partie ou complètement dans ce rail (S4 ou F1) de contact et un moyen de montage, notamment une vis, qui peut être insérée, de telle sorte que le guide (ST) de bande puisse être relié mécaniquement à une partie du châssis tout en étant en contact électrique avec le rail (S4, F1) de contact (Figure 1 ou 4).

2. Châssis suivant la revendication 1, dans lequel
a) les moyens (R1 ou R2, R3, R4) de raccordement, guidés sur le côté extérieur du corps (IK) de support isolant, du rail (S1 à S4, F1 à F4) de contact sont de préférence des broches de raccordement en aiguille et disposées en rangs,
b) le creux (A1 ou A2) dans le corps isolant (IK) et le trou (B) de traversée se trouvent à l'endroit d'une broche de raccordement dans un rang (R4) (Figure 1 ou 4).
